# EUROPEAN PATENT SPECIFICATION

(11) **EP 0 954 955 B1**
(45) Date of publication and mention of the grant of the patent: **06.08.2003**
(21) Application number: 99201419.1
(22) Date of filing: 07.05.1999
(51) Int. Cl.: A01D 34/00

(54) **Shredder**
Häcksler
Dispositif broyeur

(30) Priority: 08.05.1998 IT BO980298
(43) Date of publication of application: 10.11.1999
(73) Proprietor: Agrimaster S.r.l., 40062 Molinella (Bologna) (IT)
(72) Inventor: Martoni, Giorgio, 40062 Molinella (Bologna) (IT); Rimondi, Luigi, 40062 Molinelli (Bologna) (IT)
(74) Representative: Negrini, Elena

(56) References cited:
- EP-A- 0 434 303
- FR-A- 2 264 473
- FR-A- 2 277 624
- GB-A- 2 307 630
- US-A- 5 642 765

## Description

The present invention concerns a shredder machine.

At present the shredder machines of the present invention are used as bush-cutter at underwood or for bush cutting, by means of crushing, the shrubs having a diameter not exceeding about 30 cm.

These shredders essentially consist of a cylindrical drum, or rotor, with horizontal axis, and a plurality of hammers each of which are pivoted on the rotor in such a way to define more points of pivoting and, therefore, of crushing and to define, with groups of more hammers, more operative lines along corresponding generating lines of the cylinder (normally four and staggered each other of one right angle).

The drum is rotationally supported by a related framework supplied with a suitable rotor covering and with front and back means for linking to a tractor allowing the movement on the ground of the shredder; the rotor, besides, is supplied with linking means to the tractor drive to be rotated around its longitudinal axis, when requested.

In order to pivot each hammer on the rotor it is provided, in a known solution, the coupling of a plurality of flanges to the rotor, side by side and positioned on radial planes of the rotor axis, in order to realise continuous application areas of each hammer end pivoting between two subsequent flanges and at the desired positions.

Such rotor determines, however, a drawback due to the discontinuity of the operative lines defined by various hammers and caused exactly by said flanges, which define a continuous peripheral surface around the rotor (equal to the same flange thickness) and not usable in shrub crushing: therefore it is often necessary, in particular for big shrubs, an operation designed to cause a proper lateral shifting of the shredder, by means of the operator, in case the machine runs into difficulties during the complete material crushing, at that moment, in contact with the rotor.

Document US 5 642 765 discloses a shredder machine comprising an horizontal cylindrical drum, rotationally supported by a framework connectable with a tractor; the rotor has a plurality of facing flanges laying on transversal planes and designed to define a plurality of points of fulcrum, around said rotor, for means of pivoting and crushing of material with said means disposed along and around said rotor in order to define, in groups, several crushing horizontal lines. The shredder includes each of said flange open, or interrupted in a portion of its surface, in order to define a corresponding zone for housing said corresponding crushing mean having a dimension, in axial direction, comprising also the thickness of said flange having said housing zone. Said flanges having said zone housing said crushing means angularly staggered with respect to said preceding or the following flange in order to define, during operation, a continuous crushing line, or without inoperative zones, along a generating line of said rotor. Said shredder machine is difficult to be produced.
An object of the present invention is to propose a shredder machine having a drum most easy to be produced.

The object of the present invention is therefore to eliminate the drawback above mentioned through the realisation of a shredder having a structure of the rotor able to allow the material crushing in any position in which the same rotor contacts the material to be crushed and independently of the same material sizes, obviously within certain limit in any case not reachable with the known shredders; all by maintaining unchanged the other features, such as reliability, manoeuvrability and crushing speed, present in the shredder.

The technical characteristics of the invention, in conformity with the above mentioned objects, are clearly found in the following claims and the advantages of the same will be more evident in the following detailed description, with reference to the enclosed drawings which show an embodiment purely illustrative and not limitative, in which :
- figure 1 shows a side schematic view of a shredder, accordingly to the present invention, with some parts removed for better evidencing other parts;
- figure 2 and 3 show an element of the machine of the figure 1, such as a rotor, with views respectively taken from A and from B with respect to figure 1 and with some parts removed for better evidencing other parts;
- figure 4 shows a prospective view of the rotor of figure 1;
- figure 5 shows the disposition of the flanges associated to the rotor of the preceding figures in a schematic side view with some parts removed for better evidencing other parts;
- figure 6 shows a side view of a scheme of the hammer disposition on a rotor of the shredder according to the present invention.

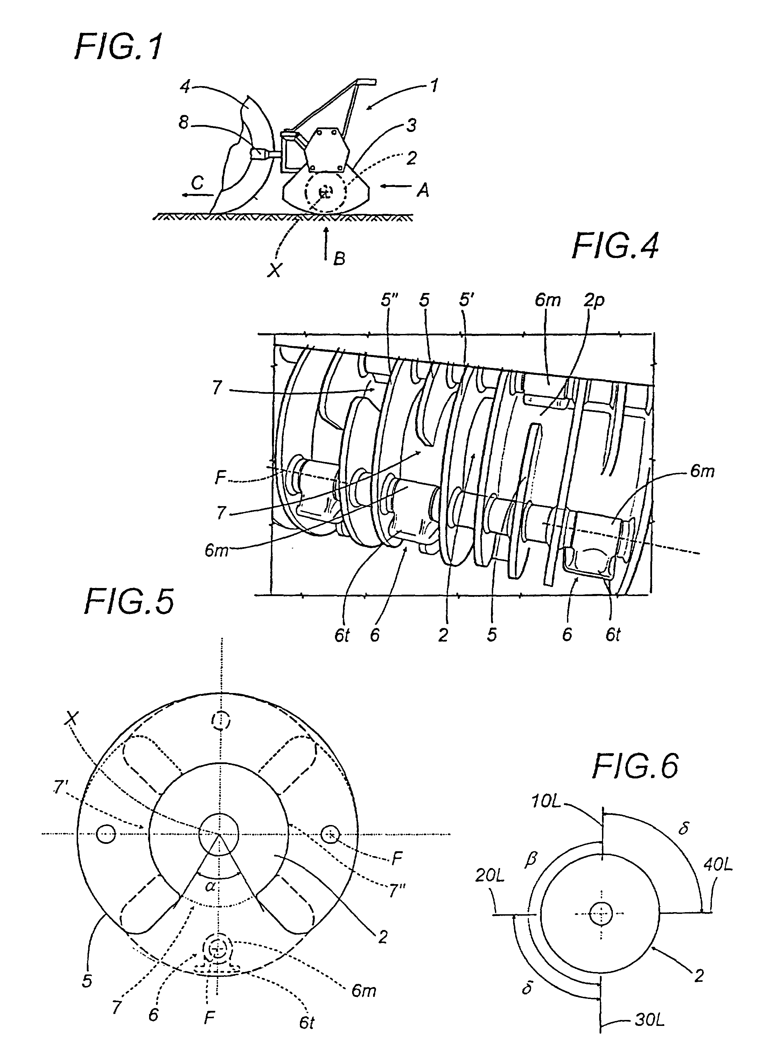

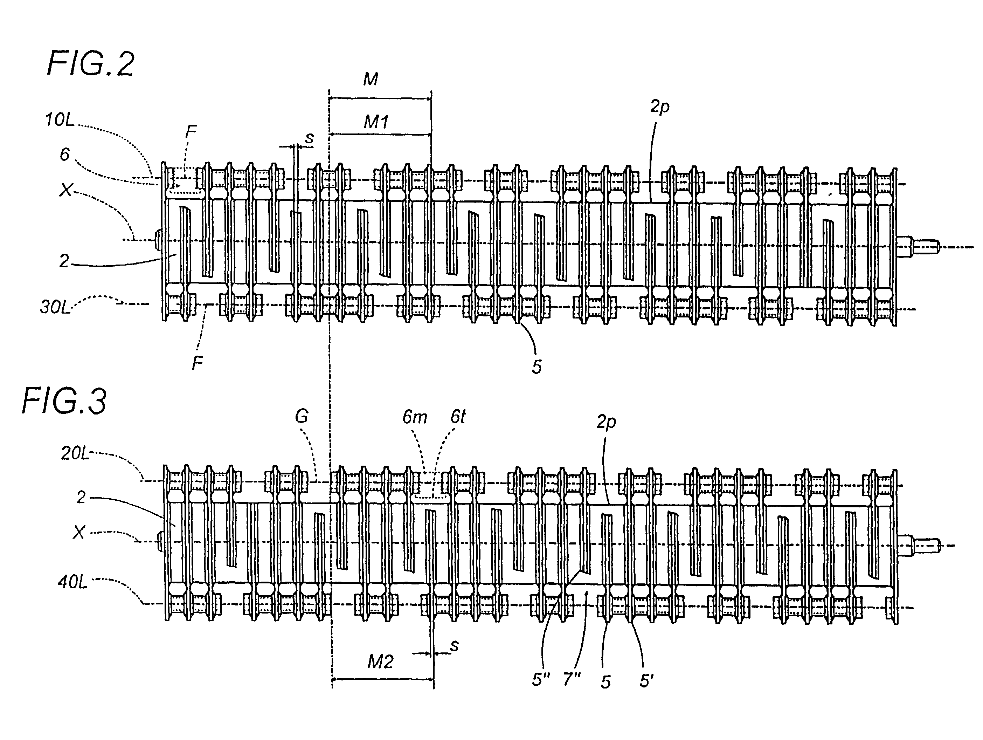

Accordingly to the figures of the enclosed drawings, and particularly referring to figure 1, the shredder in object is used as brush-cutter in bush areas with brushwood or shrubs as far as a diameter of about 30 cm.

This machine, globally referred with numeral 1, comprises a cylindrical drum or rotor 2 (illustrated with a discontinuous line in figure 1 and more clearly visible in figures 2 , 3 and 4 ), having an horizontal axis X and perpendicular to the operative direction, indicated with the arrow C, of a tractor 4 for moving the shredder; (this tractor 4 is only partially illustrated because known).

The rotor 2 is rotationally supported by a framework 3 which can be linked to the anterior part or to the posterior part of the tractor 4 through suitable means not completely illustrated because not belonging to the invention. The framework 3 also supports means for the transmission of the movement from the tractor 4 to the rotor 2 in order to allow the rotation of this latter around the above mentioned horizontal axis X; a part of these means are constituted by an universal joint 8 apparent in figure 1.

As can be seen better in figures 2, 3 and 4, a plurality of flanges 5 are fixed on the rotor 2 and are disposed side by side and positioned on radial planes relative to the axis X of the rotor 2; these flanges 5 define several fulcrum points F, distributed along and around the rotor 2, for pivoting and crushing means 6 of the above mentioned vegetal plants. Said means 6 are constituted by so-called hammers 6m freely pivoted on the rotor 2 in order to define, in groups, more crushing lines parallel to the horizontal axis X of the rotor 2 (in the case illustrated are 4 lines, indicated with 10L, 20L, 30L and 40L, defined by corresponding groups only as example).

From figure 5 it can be seen that each flange 5 on the rotor 2 is open, or each flange 5 is interrupted for a certain part of its surface. This open part defines a related zone 7 for housing a correspondent crushing hammer 6m, which has an axial dimension, in such a way to include also the thickness S of the flange 5 having the zone 7 housing the hammer 6m.

Each flange 5 associated with the rotor 2 has its zone 7 housing the hammer 6m angularly staggered with respect to the preceding or the following flange 5' and 5" (as can be seen in the discontinuous lines of figure 5); in this way it is realised, during the use of the rotor 2, a crushing continuous line, or without non-operative zones, along a generating line G of the rotor 2 that is defined by the contact line with the material to be crushed.

In the constructive details, each hammer 6m is pivoted to two flanges 5' and 5" bilaterally disposed with respect to the zone 7 lodging the same hammer and defined by the open central flange 5.

In order to cover the thickness S of the central flange 5, each hammer 6m has its head 6t operative with an extension, along the axial direction, substantially equal to the distance between the two flanges 5' and 5" of fulcrum and including, as far as above mentioned, also the central flange 5.

In figure 5 it can be seen that each flange 5 has its zone 7 housing the hammer 6m, defined, in practice, by a free portion 2p of the surface of the rotor 2, wide as an angle α of about a right angle.

As mentioned above (see figures 4, 5 and 6), each flange 5 has its housing zone 7 staggered with respect to the preceding and following zones 7' and 7" housing the corresponding adjacent flanges 5' and 5". More precisely the rotor 2 is defined by a plurality of modules M (constituted by flanges 5) repeated along their axial dimension X: in fact, each module M is defined by a couple of sub-modules M1 and M2 in each of them the hammers 6m are staggered one to the other of a straight angle β and where each sub-module M1 and M2 is staggered from the preceding of a right angle δ.

In practice, a module M comprises four hammers 6 corresponding to the lines 10L, 20L, 30L and 40L (see figure 6) and defining the two sub-modules M1 and M2: the hammer 10L is staggered of a straight angle β with respect to the hammer 30L, while the same hammer 30L is staggered with respect to the hammer 20L of a right angle δ and, in turn, the hammer 20L is staggered with respect to the hammer 40L of a straight angle β, being said hammer 40L staggered with respect to the hammer 10L of a further module M of a right angle δ and in this way for all the axial extension X of the rotor.

Obviously such modular configuration is realised in order to facilitate the construction of the rotor.

The so structured shredder, therefore, reaches the above mentioned aims, thanks to a rotor composition very simple and efficient during operation and obtained by the realisation of open zones of the flanges allowing the hammer housing, that covers, during the rotor rotation, also the non operative part of the flange defining the hammer housing: this particular configuration allows the rotor to have a continuous operative line, along a generating line, for its whole length.

The machine can be used, therefore, along all its working surface independently from the contact position with the material to be crushed.

By virtue of this particular structure it can be reached a high level of efficiency in every operative situation, maintaining in any case high level of standard also with respect to the security and the solidity of the structure.

## Claims

1. Shredder machine (1) comprising a cylindrical drum or rotor (2), with horizontal axis (X), rotationally supported by a framework (3) connectable with a tractor (4) which moves the same machine; on said rotor (2) being associated a plurality of flanges (5), disposed side by side and placed on radial planes with respect to said axis (X) of said rotor (2), and designed to define a plurality of points (F) of fulcrum, around said rotor (2), for means (6) of pivoting and crushing of material with said means (6) disposed along and around said rotor (2) in order to define, in groups, several crushing lines parallel to said horizontal axis (X) of said rotor (2), said shredder includes each of said flange (5) open, or interrupted in a portion of its surface, in order to define a corresponding zone (7) for housing said corresponding crushing mean (6) having a dimension, in axial direction, comprising also the thickness (S) of said flange (5) having said housing zone (7); said flanges (5) having said zone (7) housing said crushing means (6) angularly staggered with respect to said preceding or the following flange (5', 5") in order to define, during operation, a continuous crushing line, or without inoperative zones, along a generating line (G) of said rotor (2),
the stiredder (1) being **characterized in that** said rotor (2) is defined by a plurality of modules (M) repeated along its axial dimension (X), in which each of said module (M) is defined by a couple of sub-modules (M1, M2) in each of them said pivoting means (6) are staggered one to the another of a straight angle (β) and where each sub-module (M1, M2) is staggered with respect to the preceding of a right angle (δ)

2. Shredder according to claim 1, in which said pivoting mean (6) includes a crushing hammer (6m), **characterized in that** each hammer (6m) is pivoted to said two flanges (5', 5") bilaterally disposed with respect to said zone (7) housing the same floating means (6) defined by the central opened flange; each of said hammer having its head (6t) being operative with an axial extension, substantially having the same distance between said two fulcrum flanges (5', 5").

3. Shredder according to claim 1, **characterized in that** each flange (5) has its housing zone (7), defined by a free portion (2p) of the surface of said rotor (2), with an excursion of a right angle α.

## Patentansprüche

1. Häcksler (1) mit einer zylindrischen Trommel bzw. einem zylindrischen Rotor (2) mit horizontaler Achse (X), welche (r) in einem Rahmen (3) drehbar gelagert ist, der mit einem Traktor (4) zum Bewegen des Häckslers verbunden ist, wobei an dem Rotor (2) mehrere Flansche (5) vorgesehen sind, die Seite an Seite und in radialen Ebenen bezüglich der Achse (X) des Rotors (2) angeordnet und so ausgebildet sind, dass sie mehrere Gelenkpunkte (F) um den Rotor (2) herum für Mittel (6) zum Schwenken und Zerkleinern von Material bilden, wobei die Schwenk- und Zerkleinerungsmittel (6) längs des Rotors (2) und um den Rotor (2) herum angeordnet sind, um in Gruppen mehrere Zerkleinerungslinien parallel zu der horizontalen Achse (X) des Rotors (2) zu definieren, wobei jeder Flansch (5) an einem Teil seiner Oberfläche offen oder unterbrochen ist, um einen entsprechenden Aufnahmebereich (7) zur Aufnahme des entsprechenden Zerkleinerungsmittels (6) zu bilden, welches in axialer Richtung eine Abmessung hat, die auch die Dicke (S) des Flansches mit dem betreffenden Aufhahmebereich (7) umfasst, wobei die die Zerkleinerungsmittel (6) aufnehmenden Bereiche (7) der Flansche (5) winkelmäßig gestaffelt sind bezüglich denjenigen des vorhergehenden oder folgenden Flansches (5', 5"), um im Betrieb eine kontinuierliche Zerkleinerungslinie, ohne betriebsfreie Bereiche längs einer erzeugenden Linie (G) des Rotors (2) zu definieren; wobei der Häcksler (1) **dadurch gekennzeichnet ist, dass** der Rotor (2) von mehreren Modulen (M) gebildet wird, die sich längs seiner axialen Abmessung (X) wiederholen, wobei jedes Modul (M) von einer Gruppe Untermodule (M1, M2) gebildet wird, in denen die Schwenkmittel (6) um einen geraden Winkel (β) versetzt sind, wobei jedes Submodul (M1, M2) bezüglich des vorhergehenden um einen rechten Winkel (δ) versetzt ist.

2. Häcksler nach Anspruch 1, bei dem die Schwenkmittel (6) einen Zerkleinerungshammer (6m) umfassen, **dadurch gekennzeichnet, dass** jeder Hammer (6m) mit den beiden Flanschen (5', 5") schwenkbar verbunden ist, die beidseitig zu demjenigen Bereich (7) angeordnet sind, der das von dem mittleren offenen Flansch gebildete Schwenkmittel (6) aufnimmt, wobei jeder Hammer einen Kopf (6t) hat, der mit einer axialen Verlängerung versehen ist, welcher im wesentlichen den gleichen Abstand zwischen zwei angelenkten Flanschen (5', 5") hat.

3. Häcksler nach Anspruch 1, **dadurch gekennzeichnet, dass** der Aufhahmebereich (7) jedes Flansches (5) von einem freien Abschnitt (2p) der Oberfläche des Rotors (2) mit einer Erstreckung um einen rechten Winkel (α) definiert wird.

## Revendications

1. Broyeuse (1) comprenant un tambour ou rotor cylindrique (2), d'axe horizontal (X), supporté à rotation par un châssis (3) pouvant être relié à un tracteur (4) qui déplace ladite broyeuse ; une pluralité de flasques (5) étant montée sur ledit rotor (2), lesquels sont disposés côte à côte dans des plans radiaux par rapport audit axe (X) dudit rotor (2), et sont prévus pour définir une pluralité de points d'appui (F), autour dudit rotor (2), pour des moyens (6) de pivotement et de broyage de matériaux, lesdits moyens (6) étant disposés le long et autour dudit rotor (2) pour définir, par groupes, plusieurs lignes de broyage parallèles audit axe horizontal (X) dudit rotor (2), ladite broyeuse inclut chacun desdits flasques (5) ouverts, ou interrompus dans une portion de sa surface, afin de définir une zone correspondante (7) destinée à loger lesdits moyens de broyage correspondants (6) ayant une dimension, dans la direction axiale, comprenant également l'épaisseur (S) dudit flasque (5) ayant ladite zone de logement (7) ; lesdits flasques (5) comportant ladite zone (7) logeant lesdits moyens de broyage (6) décalés angulairement par rapport audit flasque précédent ou suivant (5', 5") afin de définir, en fonctionnement, une ligne de broyage continue, ou sans zones inopérantes, le long d'une génératrice (G) dudit rotor (2) ;
la broyeuse (1) étant **caractérisée en ce que** ledit rotor (2) est défini par une pluralité de modules (M) répétés le long de sa dimension axiale (X), dans laquelle chacun desdits modules (M) est défini par un couple de sous-modules (M1, M2) dans chacun desquels lesdits moyens de pivotement (6) sont décalés les uns par rapport aux autres suivant un angle plat (β) et dans lesquels chaque sous-module (M1, M2) est décalé par rapport au précédent d'un angle droit (δ).

2. Broyeuse selon la revendication 1, dans laquelle lesdits moyens de pivotement (6) incluent un marteau de broyage (6m), **caractérisée en ce que** chaque marteau (6m) est pivoté vers lesdits flasques (5', 5") disposés des deux côtés de ladite zone (7) logeant les mêmes moyens flottants (6) définis par le flasque central ouvert ; chacun desdits marteaux ayant sa tête (6t) opérante avec une extension axiale, ayant sensiblement la même distance entre les deux flasques (5', 5").

3. Broyeuse selon la revendication 1, **caractérisée en ce que** chaque flasque (5) a sa zone de logement (7), défini par une portion libre (2p) de la surface dudit rotor (2), avec une excursion d'un angle droit α.
